# EUROPEAN PATENT SPECIFICATION

(11) **EP 1 315 089 B1**
(45) Date of publication and mention of the grant of the patent: **09.05.2007**
(21) Application number: 01440400.8
(22) Date of filing: 27.11.2001
(51) Int. Cl.: G06F 11/00, G09G 3/20, B61L 25/08

(54) **Method and supervisory system for securing the display of a mimic diagram on a matrix display unit**
Verfahren und Überwachungssystem zur sicheren Anzeige von einer graphischen Darstellung auf einer Matrixanzeigeeinheit
Méthode et système de surveillance pour sécuriser l'affichage d'un diagramme graphique sur une unité d'affichage à matrices

(43) Date of publication of application: 28.05.2003
(73) Proprietor: ALCATEL Transport Solution Deutschland GmbH, 70430 Stuttgart (DE)
(72) Inventor: Pieper, Wolfgang, Dipl.-Ing., 71272 Renningen/Malmsheim (DE)
(74) Representative: Schmidt, Werner Karl

(56) References cited:
- WO-A-01/55853
- DE-A- 19 918 902
- GB-A- 1 527 379

## Description

### Field of the invention

The present invention relates to the field of securing the display of a mimic diagram, and more particularly to a supervisory system for safety critical applications.

### Background and prior art

It is known from the prior art to use a mimic diagram in order to visualize the state of a technical system such as a chemical plant, a nuclear power plant or a rail network. For such highly safety critical type applications it is essential to be sure that the display of the mimic diagram on the screen is correctly reflecting the present state of the system.

For example a railroad interlock system controls the track equipment of a rail network in accordance with operating requests sent out by a central station operator.

A railroad interlock system of this kind is usually associated with a supervisory system including a workstation with a screen for displaying the current status of the rail network in the form of mimic diagrams. These mimic diagrams are based on information sent back from sensors on the rail network under surveillance. An operator controls the operation of the railroad interlock system in accordance with the situation shown on the screen. Most importantly, the operator may on their own authority take decisions concerning the control of the track equipments of the rail network, in particular in the event of a malfunction of some of the equipment, with a view to guaranteeing correct operation of the network. In this context, the expression "securing the display" is to be understood as meaning detecting a malfunction of the display.

In a situation of this kind it is very important, since these are highly safety critical type operations, to be sure that the display of the mimic diagrams on the screen is an exact reflection of the current status of the rail network. In particular, it is necessary to be sure that the supervisory system is operating correctly. If it is not, it is important for the operator to be able to detect a malfunction of the supervisory system, including an error in the display of mimic diagrams. A display error can be caused by deterioration of the supervisory system, for example a program entering a loop and therefore monopolizing the central processor unit, or by faults in the memories used to store image data defining the mimic diagrams, or by a malfunction of the display screen itself (this list of possible causes of error is by no means exhaustive).

US-Pat. No. 5,608,868 shows a method for securing the display on a screen of mimic diagrams representing the status of a system connected to a workstation. A first counter is maintained in the system and a second counter is maintained in the workstation. The system periodically transmits to the workstation image data defining a mimic diagram reflecting the current status of the system, together with the first counter and a signature. In response, the workstation displays on the screen a mimic diagram based on the image data received and calculates a test value conditioned by the first and second counters, this value providing a basis for detecting a display error.

WO 01/55853 A1 shows a method for displaying an image of a traffic situation of a rail track system on a display of a pixel-oriented visual display unit of a rail traffic control system. The image is represented on the display against an image background, whose brightness or colour is adjusted according to the presence or absence of a control signal. The control signal is automatically produced by means of the control device in an interval between the input of a user - end adjusting signal and the input of a user- end acknowledge signal.

GB-A 1,527,379 shows a display device having a symbol generator, which generates a supplementary mark. The supplementary mark appears at periodic intervals on the image screen. As soon as a fault or disturbance occurs, the frequency of appearance of the mark will vary.

DE-A 199 18 902 shows a method to prevent a burn-in effect on a display unit.

In prior art safety critical systems CRT-type displays are used as for such CRT-displays it can be reasonably assumed that a malfunction of the CRT-display is immediately recognizable by the operator. This is not the case for matrix displays, such as flat panel displays, in particular thin-film-transistor (TFT) liquid-crystal displays (LCD). Such TFT-LCD display units comprise signal processing modules, such as analogue to a digital converters, ASIC modules, software drivers and millions of active field effect transistors. A failure of anyone of the signal processing sub-systems of such a TFT-LCD matrix display unit can result in a modification of the mimic diagram such that the display does not correspond to the actual state of the system to be monitored. As a consequence such matrix display units are excluded from highly safety critical applications in the prior art.

### Summary of the invention

The invention provides for an improved method for securing the display of a mimic diagram which allows to utilize a matrix display unit, such as a TFT-LCD display unit, for highly safety critical type applications. Further the invention provides for a corresponding supervisory system and computer program.

In accordance with a first embodiment of the invention the mimic diagram is displayed on the matrix display unit with a background having a gray value. The gray value of the background is constantly varied. For example the gray value of the background is varied between a lower limit and an upper gray value limit within a certain time period. The variation can be performed by starting at the lower limit, increasing the gray value to the upper limit and than decreasing the gray value from the upper limit to the lower limit and so forth. This variation is performed in small intervals to prevent flickering.

Alternatively the variation can be performed in a "saw tooth" manner by starting at the lower gray value limit, increasing the gray value up to the upper gray value limit and than immediately going back to the lower gray value limit. Other variation patterns for variation of the gray value between lower and upper limits are possible as well, including pseudo-random variations.

In accordance with a further preferred embodiment of the invention the cycle time for varying the gray values is chosen such that the variation is conveniently recognizable by an operator. An appropriate choice of the cycle time for this purpose is in the order between 0,2 seconds and 30 seconds, preferably between 20 seconds and 25 seconds.

In accordance with a further preferred embodiment of the invention the gray value G of the background is varied between G = 0 and G = 8 % on a scale, where a value of G = 0 is equal to black and G = 100 % is white. Alternatively a higher value can be chosen for the upper limit of G.

In accordance with a further preferred embodiment of the invention the display of the mimic diagram is shifted on the matrix display unit after certain predefined time intervals. This way a "burn in" effect is prevented. Typically a mimic diagram is substantially unchanged over long periods of time.

When the same display is shown on a matrix display unit over long periods of time this has a memory and / or a "burn in" effect. In the case of a TFT-LCD matrix display this effect is reversible but it takes the same amount of time to reverse the effect than it has taken to create it. In order to prevent the occurrence of the memory or burn in effects caused by the static display of a mimic diagram the display of the mimic diagram is shifted after certain time intervals.

Preferably the shifting is performed by shifting the mimic diagram along a diagonal line of the matrix display unit. Preferably the distance by which the mimic display is shifted is longer than the thickness of the lines of the mimic diagram.

For example the time interval for the shifting operations can be selected to be equal to eight hours which corresponds to one working day. After each working day or each eight hour shift such a shifting operation of the display of the mimic diagram is performed.

It is important to note that the shifting operation is not performed continuously - as it is as such known from the prior art for CRT displays. A continuous shifting operation leads to flickering on a matrix display. The present invention provides a means to prevent the memory and burn-in effects for a matrix display while at the same time preventing flickering effects of the display. This is accomplished by shifting the display at discrete time intervalls - such as 8 hours time intervalls.

In accordance with a further preferred embodiment of the invention a regular pattern of geometric objects is displayed on the matrix display unit in addition to the mimic diagram. The geometric objects are spaced apart by at least twice the column and / or row with of the matrix display. In case of an addressing error, such as an inverting address error, the shape of the regular pattern is changed in order to warn the operator of the malfunctioning of the matrix display.

In case the display "freezes" this is also immediately recognizable by the operator: In case the complete display freezes there is no variation of the gray value of the background of the mimic diagram anymore. This indicates a complete freeze.

In case only a certain region of the display unit is affected by the freeze a contrast line at the border of this region results as the background gray value within the region remains unchanged while the background gray value within the rest of the display keeps to change cyclically.

In accordance with a further preferred embodiment of the invention a bar is displayed on the matrix display. The bar shows the gray scale spectrum of the gray value variations of the background. By looking at the bar an operator can immediately recognize the changing gray value of the background because of the changing contrast with respect to the bar.

### Brief description of the drawings:

In the following the invention is explained in greater detail by making reference to the drawings in which:
- Figure 1: is a block diagram of an embodiment of a supervisory system in accordance with the invention,
- Figure 2: is a flow diagram being illustrative of an embodiment of a method in accordance with the invention,
- Figure 3: is a schematic diagram illustrating the shifting of the mimic diagram,
- Figure 4: is an enlarged partial view of the diagram of figure 3 showing an embodiment of a pattern of geometric objects.

### Detailed description

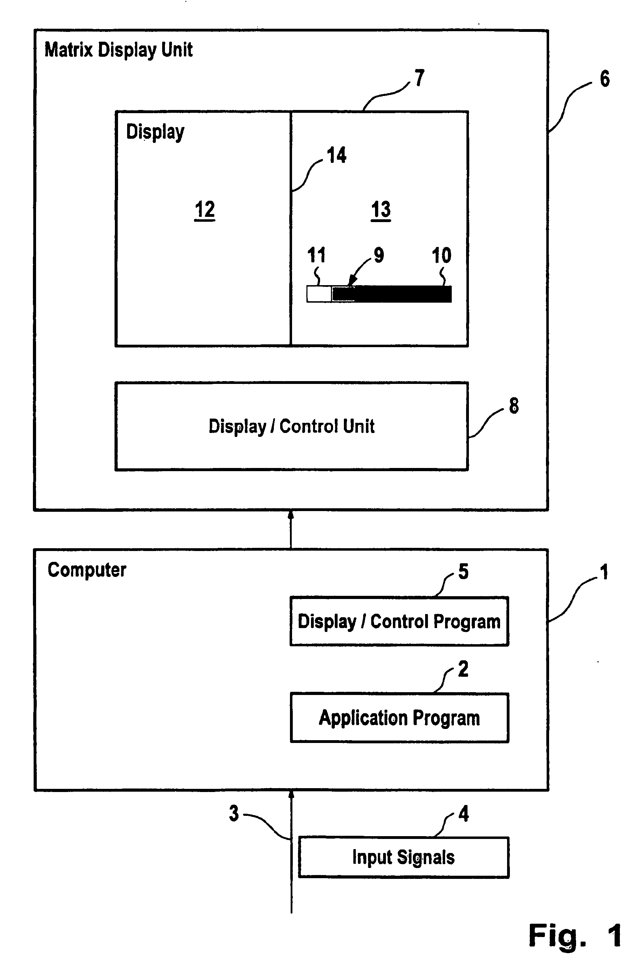

Figure 1 shows a block diagram of a supervisory system. The supervisory system has a computer 1, such as a workstation. The computer 1 has an application program 2 for producing display data of a mimic display.

The computer 1 has one or more inputs 3 for receiving of input signals being representative of the state of the system to be supervised. In the case of a rail network input signals are received from sensors which indicate changes occurring at a given time in the rail network. Thus the input signals which are entered into input 3 of the computer 1 can indicate the presence of a train on track section, the condition of a signal light on a track, the setting of a switch, etc. The application program processes the input signals 4 to generate the image data which defines the mimic diagram that reflects the current status of the rail network.

The computer 1 further comprises a display control program 5. The display control program 5 serves to vary the gray value of the background of the mimic diagram.

The computer 1 is coupled to a matrix display unit 6 which comprises a TFG-LCD display 7 and a display control unit 8. A standard analoge or digital interface can be used for coupling the computer 1 and the display unit 6.

The display control unit 8 receives display control signals which are generated by the application program 2 and the display control program 5. These display control signals define the mimic diagram to be displayed and the actual gray value of the background of the mimic diagram.

The display control program 5 generates display control signals such that a gray scale bar 9 is displayed on the display 7. The gray scale bar shows the scale of gray values which are used for cyclically varying the gray value of the background of the mimic diagram.

In normal operation the mimic diagram is displayed on the display 7 while the gray value of the background of the mimic diagram is continuously varied between the lower gray value 10 and the upper gray value 11 of the gray scale bar 9.

Because of a defect of the display control unit 8 the display 7 can "freeze" at a certain point of time. This means that the display shown on the display 7 remains unchanged even though display control signals are received from the computer 1 for display of the changing background gray values and/or changes within the mimic diagram reflecting changes of the state of the monitored system. A complete "freeze" can be detected immediately by the operator as the gray value of the background of the mimic diagram stops changing.

Another scenario for a malfunction of the display control unit 8 is that only parts of the display 7 are frozen. For instance the left side 12 of the display 7 is frozen. In this case the gray value of the background of the mimic diagram keeps changing on the right side 13 of the display 7 while the gray value of the background on the left side remains unchanged. This results in a contrast line 14 between the left and the right sides 12 and 13. By means of the contrast line 14 such a partial failure of the display 7 also becomes immediately apparent to the operator.

The gray scale bar 9 is a visual aid for the operator in order to ensure that the gray value of the background is constantly changing. By looking at the gray scale bar 9 the operator sees how the gray scale of the background constantly changes between the lower and upper gray values 10 and 11 in case that the matrix display unit 6 is correctly operating.

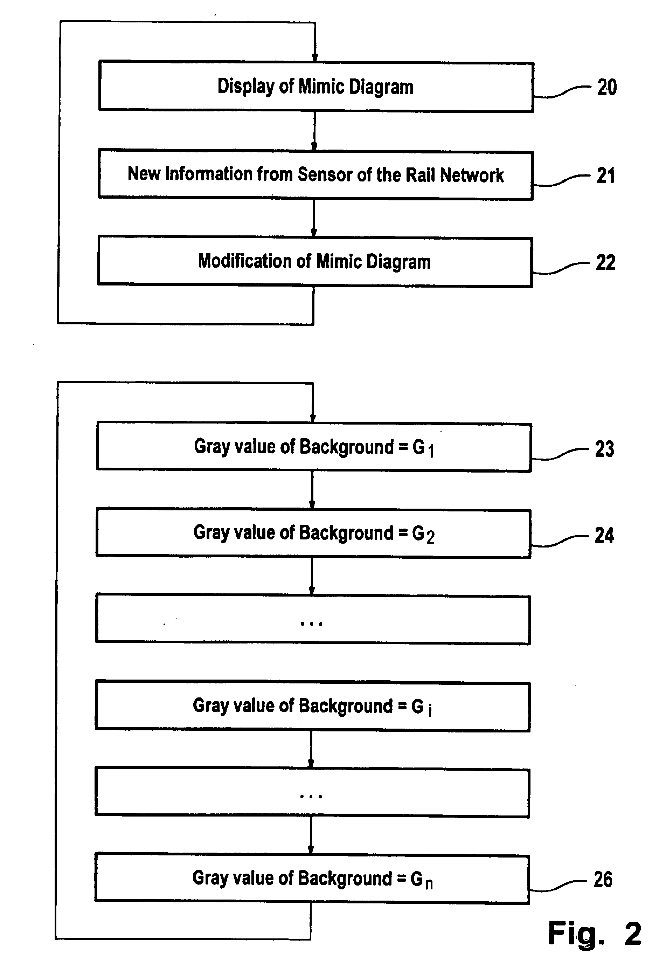

Figure 2 shows a corresponding flow chart. In step 20 a mimic diagram is displayed on a matrix display unit (cf. matrix display unit 6 of figure 1). In step 21 a new information is received from a sensor of the rail network (cf. input signals 4 of figure 1). This new information results in a modification of the mimic diagram in step 22 by the corresponding application program (cf. application program 2 of figure 1).

The modified mimic diagram is displayed in step 20. The steps 20, 21 and 22 are carried out repeatedly.

In parallel to the process comprising the steps 20, 21 and 22 there is a process for varying the gray value of the background of the mimic diagram. In step 23 of this process the gray value of the background takes an initial value such as the value G₁ (cf. lower gray value 10 of figure 1). In step 24 this gray value is increased to G₂ after a certain time interval.

In the following the gray value of the background of the mimic diagram is increased step by step in successive time intervals until the gray value G; reaches the upper gray value Gₙ (cf. upper gray value 11 of the gray scale bar 9 of figure 1) in step 26.

From step 26 the control (cf. display control program 5 of figure 1) returns back to step 23. The cycle time for the gray scale variation, i.e. the time interval between step 23 and step 26, is chosen such that an operator can conveniently recognize the variation of the gray scale of the background of the mimic diagram. An appropriate choice of the cycle time for this purpose is between 20 seconds and 30 seconds.

Alternatively the gray values are varied in a "saw tooth" manner, i.e. after the gray value of Gₙ is reached, the gray value is decreased to Gₙ₋₁, Gₙ₋₂, ... until the gray value of G₁ is reached again. From there the gray value is iteratively increased until Gₙ is reached and so on.

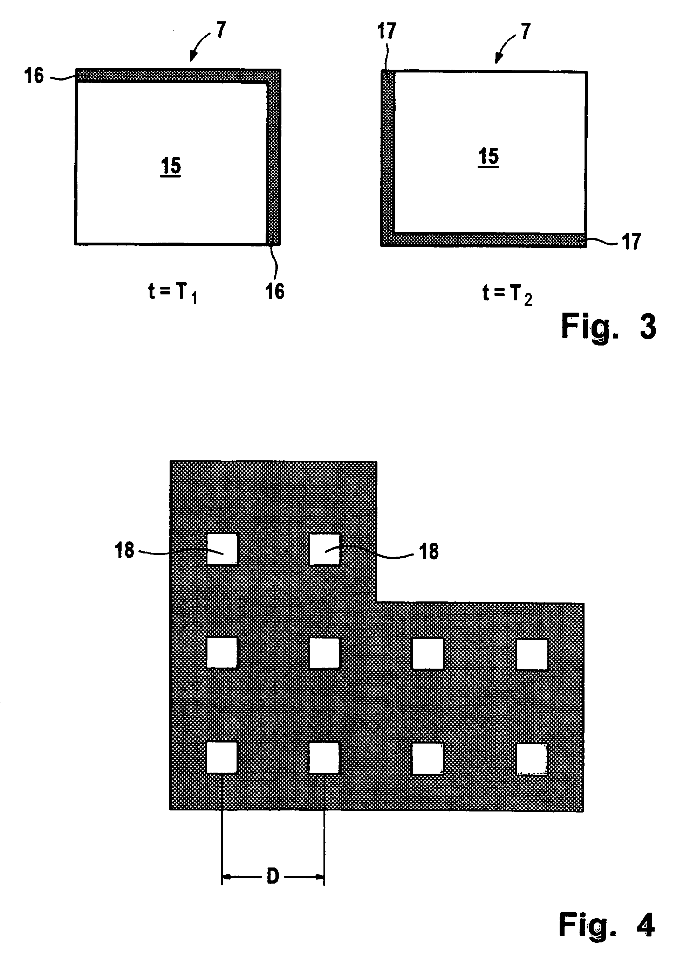

Figure 3 shows a schematic diagram to illustrate the shifting of the mimic diagram on the display (cf. display 7 of figure 1) at certain times.

At a time t = T₁ the mimic diagram 15 is displayed in a position which leaves an upper and a right margin 16 on the display 7.

At a time t = T₂ the mimic diagram 15 is shifted to another position which leaves a left and a bottom margin 17 on the display 7. For example the time interval between T₁ and T₂ is chosen to be equal to eight hours which corresponds to one working day or to an eight hour shift. For example at the end of the morning shift the mimic diagram 15 is diagonally shifted from its position at time t =T₁ to its diagonally shifted position at time t =T₂. At the end of the day shift the mimic diagram 15 is diagonally shifted back to its original position and so on.

This way a memory or burn in effect of the static display of the mimic diagram is prevented.

Figure 4 shows an enlarged section of the margins 16 and 17. A regular pattern of geometric objects such as squares 18 is displayed within the margins 16 or 17, respectively. The squares 18 are spaced apart by a distance D. The distance D is longer than three times the column width of the display matrix of the display 7 (cf. figure 1) and it is also longer than twice the row width.

In the more general case the distance D preferably is chosen as an uneven multiple of the column width. For example if a square 18 corresponds to a pixel the distance D is chosen as 3, 5, 7, ... times the pixel width.

In case of an inverting address error of the display control unit such an address error results in a modification of the appearance of the regular pattern displayed in the margin. This way such an inverting address error also becomes apparent to the operator.

### list of reference numerals

- computer: 1
- application program: 2
- input: 3
- input signals: 4
- display control program: 5
- matrix display unit: 6
- display: 7
- display control unit: 8
- gray scale bar: 9
- lower gray value: 10
- upper gray value: 11
- left side: 12
- right side: 13
- contrast line: 14
- mimic diagram: 15
- margin: 16
- margin: 17
- square: 18

## Claims

1. A method for securing the display of a mimic diagram on a matrix display unit, the methods comprising the steps of:
- displaying the mimic diagram on the matrix display unit with a background having a gray value, **characterized by**
- cyclically varying the gray value between a first gray value and a second gray value,
- displaying a gray scale bar showing the gray scale spectrum between the first gray value and the second gray value.

2. The method of claim 1, whereby the gray value is varied from the first gray value to the second gray value in discrete gray value steps.

3. The method of claim 1, whereby the cycle-time of the cyclic variation of the gray value is between 0,2 seconds and 30 seconds, preferably between 20 seconds and 25 seconds.

4. The method of claim 1, whereby the matrix display unit comprises a thin-film-transistor (TFT) liquid-crystal display (LCD).

5. The method of claim 1, whereby the gray value is varied by about 10 percent on a gray value scale from black to white.

6. The method of claim 5 the gray value being varied between black and eight percent.

7. The method of claim 1 further comprising cyclically shifting of the mimic diagram between a first and a second position on the matrix display unit, whereby the shifting is performed after a time interval, preferably in the order of eight hours.

8. The method of claim 1 further comprising displaying a regular pattern of geometric objects on the matrix display unit, the objects being spaced apart by at least twice the extend of a matrix column or a matrix row of the matrix display unit.

9. A computer program product for performing a method in accordance with anyone of the preceding claims 1 to 8.

10. A supervisory system comprising a matrix display unit (6), a computer (1) coupled to the matrix display unit, and computer program means (2, 5) for performing a method in accordance with anyone of the preceding claims 1 to 8.

## Patentansprüche

1. Verfahren zur sicheren Anzeige eines Schaubilds auf einer Matrixanzeigeeinheit, beinhaltend die Schritte,
- das Schaubild auf der Matrixanzeigeeinheit mit einem Hintergrund darzustellen, der einen Grauwert aufweist, **gekennzeichnet durch**
- zyklisches Verändern des Grauwerts zwischen einem ersten Grauwert und einem zweiten Grauwert
- Darstellen eines Graustufenbalkens, der das Graustufenspektrum zwischen dem ersten Grauwert und dem zweiten Grauwert anzeigt.

2. Verfahren gemäß Anspruch 1, wobei der Grauwert vom ersten zum zweiten Grauwert in einzelnen Grauwertschritten verändert wird.

3. Verfahren gemäß Anspruch 1, wobei die Zykluszeit der zyklischen Veränderung des Grauwerts zwischen 0,2 Sekunden und 30 Sekunden und vorzugsweise zwischen 20 Sekunden und 25 Sekunden liegt.

4. Verfahren gemäß Anspruch 1, wobei die Matrixanzeigeeinheit eine Dünnfilmtransistor- (Thin-Film-Transistor-, TFT-) Flüssigkristallanzeige (Liquid Crystal Displays, LCD) beinhaltet.

5. Verfahren gemäß Anspruch 1, wobei der Grauwert um etwa 10 Prozent auf einer von Schwarz bis Weiß reichenden Grauwertskala verändert wird.

6. Verfahren gemäß Anspruch 5, wobei der Grauwert zwischen Schwarz und acht Prozent verändert wird.

7. Verfahren gemäß Anspruch 1, ferner beinhaltend das zyklische Verschieben des Schaubildes zwischen einer ersten und einer zweiten Position auf der Matrixanzeigeeinheit, wobei das Verschieben nach Ablauf eines zeitintervalls vorzugsweise in der Größenordnung von acht Stunden ausgeführt wird.

8. Verfahren gemäß Anspruch 1, ferner beinhaltend das Anzeigen eines regelmäßigen Musters aus geometrischen Objekten auf der Matrixanzeigeeinheit, wobei die Objekte voneinander einen Abstand haben, der mindestens der doppelten Spalten- oder zeilenbreite der Matrixanzeigeeinheit entspricht.

9. Computerprogrammprodukt zum Durchführen eines Verfahrens gemäß einem oder mehreren der vorgenannten Ansprüche 1 bis 8.

10. Überwachungssystem, beinhaltend eine Matrixanzeigeeinheit (6), einen mit der Matrixanzeigeeinheit gekoppelten Computer (1) und Computerprogramm-Mittel (2, 5) zum Durchführen eines Verfahrens gemäß einem oder mehreren der vorgenannten Ansprüche 1 bis 8.

## Revendications

1. Procédé destiné à sécuriser l'affichage d'un schéma synoptique sur une unité d'affichage par matrice, le procédé comprenant les étapes de :
- affichage du schéma synoptique sur l'unité d'affichage par matrice avec un fond ayant une valeur de gris, **caractérisé en ce que**
- on fait varier de façon cyclique la valeur de gris entre une première valeur de gris et une seconde valeur de gris,
- on affiche une barre de l'échelle de gris montrant le spectre de l'échelle de gris entre la première valeur de gris et la seconde valeur de gris.

2. Procédé selon la revendication 1, par lequel on fait varier la valeur de gris de la première valeur de gris à la seconde valeur de gris dans des étapes de valeurs de gris discrètes.

3. Procédé selon la revendication 1, par lequel le temps de cycle de la variation cyclique de la valeur de gris est dans la fourchette entre 0,2 secondes et 30 secondes, de préférence, entre 20 secondes et 25 secondes.

4. Procédé selon la revendication 1, par lequel l'unité d'affichage par matrice comprend un écran à cristaux liquides (LCD) de transistor à couches minces (TFT).

5. Procédé selon la revendication 1, par lequel on fait varier la valeur de gris d'environ 10 pour cent sur une échelle de valeur de gris du noir au blanc.

6. Procédé selon la revendication 5, la valeur de gris étant soumise à une variation entre le noir et huit pour cent.

7. Procédé de la revendication 1 comprenant en outre le déplacement cyclique du schéma synoptique entre une première position et une seconde position sur l'unité d'affichage par matrice, par lequel le déplacement est effectué après un intervalle de temps, de préférence, de l'ordre de huit heures.

8. Procédé selon la revendication 1, comprenant en outre l'affichage d'une configuration normale d'objets géométriques sur l'unité d'affichage par matrice, les objets étant espacés d'au moins deux fois l'étendue d'une colonne ou d'une rangée de matrice ou de l'unité d'affichage par matrice.

9. Produit de programme informatique permettant d'effectuer un procédé conformément à l'une quelconque des revendications 1 à 8.

10. Système de surveillance comprenant une unité d'affichage par matrice (6), un ordinateur (1) couplé à l'unité d'affichage par matrice, et des moyens de programme informatique (2, 5) permettant d'effectuer un procédé conformément à l'une quelconque des revendications 1 à 8.
